# EUROPÄISCHE PATENTANMELDUNG

(11) **EP 3 926 925 A1**
(43) Veröffentlichungstag der Anmeldung: **22.12.2021**
(21) Anmeldenummer: 20179873.3
(22) Anmeldetag: 15.06.2020
(51) Int. Cl.: H04L 29/08

(54) **INDUSTRIELLES AUTOMATISIERUNGSSYSTEM MIT EINEM ECHTZEITFÄHIGEN KOMMUNIKATIONSNETZWERK**

(71) Anmelder: Siemens Aktiengesellschaft, 80333 München (DE)
(72) Erfinder: Fischer, Thomas, 91056 Erlangen (DE); Höme, Stephan, 91126 Schwabach (DE); Jung, Konstantin, 90537 Feucht (DE); Kerschbaum, Sven, 90768 Fürth (DE); Volkmann, Frank, 90475 Nürnberg (DE)

(57) **Zusammenfassung**

Um bei einem industriellen Automatisierungssystem (1) mit einem industriellen echtzeitfähigen Kommunikationsnetzwerk (INET), eine Netzlast zu reduzieren, wird vorgeschlagen, einen Subscriber-Client (SC1) derart auszugestalten, dass er einem zentralen OPC UA spezifischen Server (OUSS) einen Bedarf (DEM) mitteilen kann, welche Datensätze (DS2,DS3) der Subscriber (S1) benötigt,
- der zentrale OPC UA spezifische Server (OUSS) ist dann ausgestaltet, diesen Bedarf (DEM) an Datensätzen (DS2,DS3) des Subscribers (S1) abzuspeichern,
- weiterhin ist der zentrale OPC UA spezifischen Server (OUSS) ausgestaltet aufgrund der Kenntnis des Bedarfs (DEM) an Datensätzen (DS2,DS3) des Subscriber (S1) dem Publisher (P1) mitzuteilen, welche Datensätze (DS2,DS3) der Subscriber (S1) benötigt,
- dabei ist der zentrale OPC UA spezifische Server (OUSS) ausgestaltet,
- den Publisher (P1) von Entscheidungen der Network-Message (NWM) mit bestimmtem Datensätzen (D1,D2,D3) derart zu entlasten, dass der zentrale OPC UA spezifischen Server (OUSS) dem Publisher (P1) einen Anpassungsbefehl (33) mitteilt, welcher den Publisher (P1) veranlasst die Übertragung der Network-Message (NWM) nur mit den Datensätzen (DS2,DS3), die der Subscriber (S1) benötigt, durchzuführen.

## Beschreibung

Die Erfindung betrifft ein industrielles Automatisierungssystem umfassend ein industrielles echtzeitfähiges Kommunikationsnetzwerk, mehrere Applikationen, welche auf das Kommunikationsnetzwerk zugreifen, wobei zumindest eine erste Applikation als ein Publisher ausgestaltet ist, und eine zweite Applikation als ein Subscriber ausgestaltet ist, wobei der Publisher einen Datenstrom in Form einer Network-Message versendet, welche einen oder mehrere Datensätze umfasst, weiterhin aufweisend einen zentralen OPC UA spezifischen Server, welcher Konfigurationsinformationen für das Kommunikationsnetzwerk aufbereitet, wobei der Publisher einen Publisher-Client von dem zentralen OPC UA spezifischen Server aufweist, und der Subscriber einen Subscriber-Client von dem zentralen OPC UA spezifischen Server aufweist.

In der industriellen Kommunikation ist es wichtig das Netzwerk möglichst wenig bis gar nicht zu belasten. Bei einer Kommunikation über OPC UA PubSub (OPC: Open Platform Communications, UA: Unified Architecture, PubSub: publish/subscribe) werden auf der Seite der Quelle (Publisher) Daten aus einem Modell in Datensätze verpackt und über Network Messages versendet. Die Senke (Subscriber) nimmt diese entgegen und überprüft, welche dieser Datensätze sie abonniert hat und verwertet diese. Weiterhin wird das Kommunikationsnetz OPC UA PubSub über eine zentrale Realisierung der TSN (Time-Sensitive-Networking) Netzwerkschicht gelegt. Die zur Konfiguration des Netzwerkes notwendige Kommunikation wird über einen zentralen OPC UA spezifischen Dienst abgewickelt, der die Konfigurationsinformation für das Netzwerk aufbereitet (OUSS "PubSub TSN Centralized Configuration"). Somit ist der OUSS Server der "OPC UA-CUC" (Central User Configuration) für das zentrale TSN-Netz. Der OUSS Client des Publishers teilt die relevanten Informationen (Zykluszeit, Datensätze, Publisher ID etc.) dem OUSS Server mit, damit dieser einen passenden Stream anlegt, auf welchen sich dieser attachen kann. Der OUSS Client des Subscriber teilt dem Server mit, welchen Publisher er abonnieren möchte.

Die in industriellen Kommunikationsnetzwerken verwendete Kommunikation über den Standard OPC UA PubSub Part 14 (Open Platform Communications Unified Architecture Publish/Subscribe), wirkt diesem Bestreben jedoch entgegen. Ein typisches industrielles Kommunikationsnetzwerk umfasst eine Nachrichtenquelle als Sender, zumindest eine Nachrichtensenke als Empfänger und zumindest eine Netzwerkkomponente als jeweiliges Verbindungselement zwischen dem Sender und dem Empfänger. Bei einer Kommunikation über OPC PubSub werden auf Seiten der Nachrichtenquelle (Publisher) Daten aus einem Modell entnommen, in jeweilige Gruppen des Modells verpackt und als Nachrichten (Netzwerknachrichten oder Network Messages) versendet. Eine jeweilige Nachrichtensenke (Subscriber) nimmt die Nachricht entgegen und überprüft, welche der Gruppen oder Daten von ihm abonniert wurden und verwendet die entsprechende Information aus den Nachrichten. Gruppen oder Daten, die für eine betreffende Nachrichtensenke nicht relevant sind, werden von der Nachrichtensenke beim Empfang der Nachricht verworfen. Eine Belastung der Nachrichtensenke wird somit durch das Verwerfen von nicht benötigten Gruppen reduziert. Oder anders gesagt, PubSub erlaubt mehrere Subscriber, sodass eine von einem Publisher gesendete NetworkMessage von mehreren Subscribern empfangen wird. Dabei müssen allerdings nicht alle in der NetworkMessage enthaltenen Datensätze (DataSetMessages) für alle Subscriber relevant sein. D.h. auf Seite der Subscriber findet im OPC UA PubSub-Protokollstapel bei der Verarbeitung eine Filterung der nicht-relevanten Daten statt.

Allerdings wird das Kommunikationsnetzwerk durch die unnötige Übertragung nicht benötigter Informationen zusätzlich belastet. Diese Mehrbelastung wurde bislang auf Kosten des Kommunikationsnetzwerkes akzeptiert, was jedoch deren Kosten in die Höhe treibt und negative Auswirkungen auf die Echtzeit-Fähigkeit der Datenübertragung im Hinblick auf eine Latenzzeit oder auf einen Jitter hat.

Es ist Aufgabe der Erfindung, ein industrielles Automatisierungssystem mit einem Kommunikationsnetzwerk für eine industrielle echtzeitfähige Kommunikation anzugeben, welches funktionell und oder baulich derart verbessert ist, dass die Belastungen des Kommunikationsnetzwerkes beim zyklischen Übertragen von Nachrichten so gering wie möglich gehalten werden.

Für das eingangs genannte industrielle Automatisierungssystem mit dem industriellen echtzeitfähigen Kommunikationsnetzwerk, wird die Aufgabe dadurch gelöst, dass der Subscriber-Client ausgestaltet ist, dem zentralen OPC UA spezifischen Server einen Bedarf mitzuteilen, welche Datensätze der Subscriber benötigt, der zentrale OPC UA spezifische Server ist ausgestaltet, diesen Bedarf an Datensätzen des Subscribers abzuspeichern, weiterhin ist der zentrale OPC UA spezifische Server ausgestaltet, aufgrund der Kenntnis des Bedarfs an Datensätzen des Subscribers dem Publisher mitzuteilen, welche Datensätze der Subscriber benötigt, dabei ist der zentrale OPC UA spezifische Server ausgestaltet, den Publisher von Entscheidungen Network Messages mit bestimmten Datensätzen zu senden, zu entlasten, wobei der zentrale OPC UA spezifische Server ausgestaltet ist, dem Publisher einen Anpassungsbefehl mitzuteilen, welcher den Publisher veranlasst, die Übertragung der Network-Message nur mit den Datensätzen, die der Subscriber benötigt, durchzuführen. Dies kann mittels der in OPC UA Part 14 spezifizierten Methoden zur Konfiguration von Publisher und Subscriber erfolgen. Eine in Part 14 alternativ genannte Methode besteht in der Konfiguration von Publisher bzw Subscriber mittels des ebenfalls in Part 14 spezifizierten Binary-Formats. Die Übertragung der Binary-Datei zum Publisher bzw. Subscriber ist jedoch heute nicht Bestandteil des Standards, sodass bei diesem Weg eine proprietäre Lösung hierfür erforderlich wäre.

In der Regel wird die zur Konfiguration des Netzwerkes notwendige Kommunikation über einen zentralen OPC UA spezifischen Dienst abgewickelt, welcher die Konfigurationsinformation für das Netzwerk aufbereitet, üblicherweise ist dies in dem zentralen OPC UA spezifischen Server (OUSS) realisiert. Unter einem OUSS-Server versteht man einen für PubSub und TSN spezifischen Konfigurations-Server. Ein zu dem OUSS-Server existierender Client kann dem Publisher dann die relevanten Informationen, wie Zykluszeit, Datensätze und der entsprechenden Publisher/Subscriber ID mitteilen. Ein OUSS-Server kann dann aufgrund dieser Daten einen passenden Stream anlegen, auf welchem sich der Subscriber "attachen" kann. Der entsprechende OUSS-Client des Subscribers teilt dem OUSS-Server mit welchen Publisher er abonnieren möchte. Nun wird aber aufgrund einer Discovery Response Message (Push Mode) eine unnötige Übertragung von Datensätzen in der Network-Message unterdrückt. Es wird quasi mittels eines aufgezwungenen Anpassungsbefehls eine Änderungsmitteilung an den Publisher übergeben, wodurch eine neue Stream-Konfiguration bereitgestellt werden kann. Die Erfindung beinhaltet dabei nicht nur das Aufteilen einer NetworkMessage auf mehrere Network-Messages. Unter Umständen kann auch das Zusammenfassen von zwei NetworkMessages zu einer verbesserten Netzwerkauslastung führen. Dies ist insbesondere dann der Fall, wenn der Protokoll-Overhead (z.B. durch entsprechende Header) gegenüber den eigentlich in der NetworkMessage übertragenen Daten überwiegt. Dadurch kann u.U. durch das Zusammenfassen ebenfalls eine Reduzierung der beanspruchten Bandbreite im Netz erfolgen.

Bei OPC UA PubSub ist es nämlich so, dass die Daten, die über einen Stream übertragen werden sollen, in Dataset-Messages gepackt werden. Diese Dataset Messages bilden logische Einheiten für z.B. industrierelevanter Informationen. Mehrere Dataset Messages werden in einer Network Message, welche zyklisch versendet wird, gruppiert, die den Inhalt des Streams ausmachen. Nach dem Stand der Technik war es nun so, dass sich einzelne Subscriber immer nur auf einen Standard-Stream subscriben konnten und erhielten somit immer alle Datasets, die ein Publisher in einer Network Message verschickt.

Erfindungsgemäß wird nun vom Subscriber eine Bedarfsmitteilung an den OPC UA spezifischen Server abgesetzt, woraufhin dieser mittels eines Anpassungsbefehls den Publisher und vor allen den von ihm aus gesendeten Stream umkonfiguriert.

In einer weiteren Ausgestaltung weist das industrielle Automatisierungssystem einen Netzwerk-Konfigurator auf, wobei der OPC UA spezifische Server ausgestaltet ist, aufgrund der Kenntnis des Bedarfs eine maximal benötigte Bandbreite zu ermitteln und eine aufgrund der Kenntnis des Bedarfs resultierenden Network-Message-Konfiguration an den Netzwerk-Konfigurator weiterzugeben, wobei der Netzwerk-Konfigurator ausgestaltet ist, dies in zukünftige Netzwerkplanungen einzubeziehen.

Da dem OPC UA spezifischen Server nun die neue maximal benötigte Bandbreite für den jeweilig benutzten Stream bekannt ist, kann er die entsprechende Stream-Konfiguration auch an den zentralen Netzwerk-Konfigurator weitergeben, der dies in seiner Netzwerkplanung berücksichtigt.

Weiterhin ist der Netzwerk-Konfigurator ausgestaltet, die zukünftigen Netzwerkplanungen zur Laufzeit durchzuführen. Durch diese Rekonfiguration zur Laufzeit (change in run) wird erreicht, dass ein Anteil für den Datenpfad ursprünglich reservierter Bandbreite nicht reserviert werden muss und somit für andere Applikationen frei wird.

Weiterhin von Vorteil ist es, wenn das echtzeitfähige Kommunikationsnetzwerk ausgebildet ist nach dem Standard IEEE 802.1 Time Sensitive Network zu arbeiten.

Insbesondere ist es ein Vorteil, wenn das echtzeitfähige Kommunikationsnetzwerk ausgebildet ist nach dem Standard OPC UA PubSub zu arbeiten.

Erfindungsgemäß wurde nun dafür gesorgt, unnötigen Datenverkehr möglichst früh aus dem Netzwerk zu eliminieren. Um aber Datenpakete aus den Netzwerken zu eliminieren, muss die Quelle (Publisher) Kenntnis darüber haben, welche Datensätze von welchen Datensenken (Subscriber) nicht abonniert werden oder wurden. Da jedoch, wie vor der Erfindung geschehen, eine Quelle nichts über ihre Senken weiß, wurden hierfür Mittel eingeführt, welche mit der Kenntnis sowohl über die Publisher als auch über die Subscriber einen im Netz befindlichen zentralen Server versorgt, welcher dann mit Änderungsmitteilungen in einen sogenannten Push Mode die Publisher bzw. deren Screams bedarfsgerecht zur Laufzeit umkonfigurieren kann.

Die Erfindung wird nachfolgend näher anhand der Beschreibung eines Ausführungsbeispiels in der Zeichnung erläutert. Es zeigen
- FIG 1: eine schematische Darstellung eines industriellen Kommunikationsnetzwerk nach dem Stand der Technik,
- FIG 2: eine schematische Darstellung des in FIG 1 gezeigten Kommunikationsnetzwerkes mit der erfindungsgemäßen Erweiterung,
- FIG 3: ein Publisher mit einen Bedarfsermittlungsmittel und
- FIG 4: einen OPC UA spezifischen Server mit einer Bedarfsdatenbank.

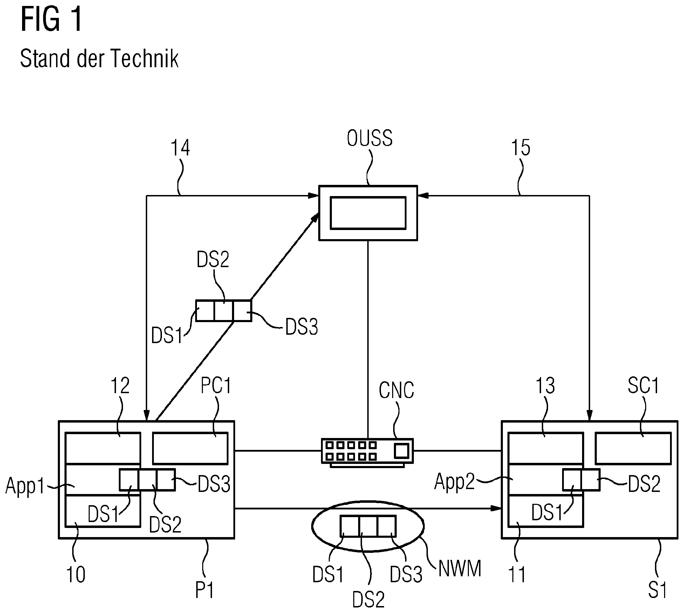

Gemäß FIG 1 ist ein industrielles echtzeitfähiges Kommunikationsnetzwerk INET dargestellt. Das echtzeitfähige industrielle Kommunikationsnetzwerk INET verbindet verschiedene Komponenten eines Automatisierungssystems 1. Ein Publisher P1 sendet eine Network-Message NWM zu einem Subscriber S1. Der Publisher P1 weist eine erste Applikation Appl, welche einen ersten Datensatz DS1, einen zweiten Datensatz DS2 und einen dritten Datensatz DS3 bereitstellt. Diese drei Datensätze DS1,DS2,DS3 werden zyklisch über die Network-Message NWM versendet. Der Subscriber S1 hat von dem Publisher P1 Datensätze abonniert, er benötigt aber nur den ersten Datensatz DS1 und den zweiten Datensatz DS2. Er bekommt aber nach dem Stand der Technik mittels der Network-Message NWM immer ein Bündel von drei Datensätzen DS1,DS2,DS3. Der Subscriber S1, welcher den dritten Datensatz DS3 nicht benötigt, wird diesen beim Empfang verwerfen. Dennoch wurde der dritte Datensatz DS3 unnötigerweise mit Übertragen und belastet somit das Netzwerk, obwohl der dritte Datensatz DS3 niemals gebraucht wurde.

Das Automatisierungssystem 1 weist einen zentralen OPC UA spezifischen Server OUSS auf, welcher über einen Anmelde- und Konfigurationspfad (Publisher-Seite) 14 und über einen Anmelde- und Konfigurationspfad (Subscriber-Seite) 15 den Publisher P1 und den Subscriber S1 konfigurieren und verwalten kann.

Für eine Verwaltung mittels des OPC UA spezifischen Servers OUSS weist der Publisher P1 einen Publisher-Client PC1 auf und der Subscriber S1 weist einen Subscriber-Client SC1 auf. Dementsprechend hat der Publisher P1 eine Client/Server-Struktur 12 (Publisher-Seite) implementiert und der Subscriber S1 ebenfalls eine Client/Server-Struktur (Subscriber-Seite) 13 implementiert.

Weiterhin wird die Kommunikation über einen Netzwerk-Konfigurator CNC gesteuert.

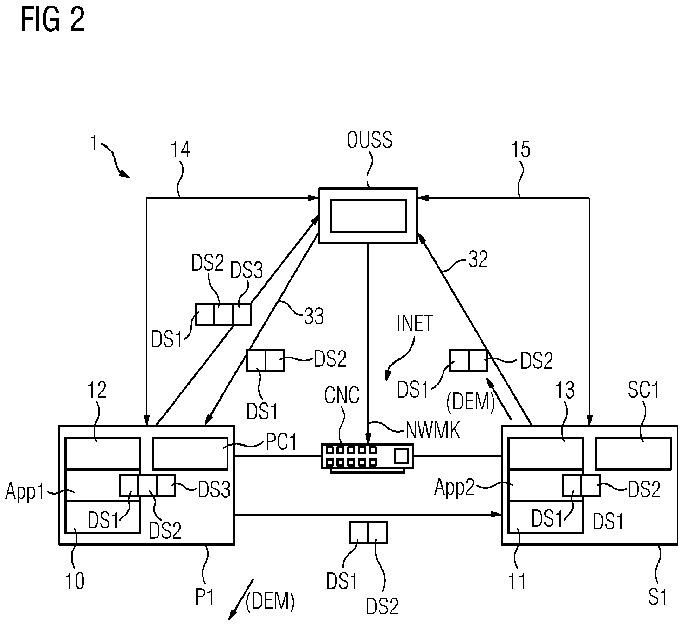

Da bei dem Automatisierungssystem 1, insbesondere bei dem echtzeitfähigen industriellen Kommunikationsnetzwerk INET, gemäß FIG 1, es von Nachteil ist, dass unnötige Datensätze mit über das Netzwerk mittels der Network-Message NWM übertragen werden, wird gemäß FIG 2 eine Verbesserung dargestellt. Demnach ist der Subscriber-Client SC1 ausgestaltet, dem zentralen OPC UA spezifischen Server OUSS einen Bedarf DEM mitzuteilen, welche Datensätze, nämlich nur den zweiten Datensatz DS2 und den dritten Datensatz DS3, der Subscriber S1 benötigt. Zusätzlich ist der zentrale OPC UA spezifische Server OUSS ausgestaltet, diesen Bedarf DEM an Datensätzen DS2,DS3 des Subscribers S1 abzuspeichern. Weiterhin ist der zentrale OPC UA spezifische Server OUSS ausgestaltet, aufgrund der Kenntnis des Bedarfs DEM an Datensätzen DS2,DS3 des Subscribers S1 dem Publisher P1 mitzuteilen, welche Datensätze DS2,DS3 der Subscriber S1 benötigt. Dabei ist der zentrale OPC UA spezifische Server OUSS ausgestaltet, den Publisher P1 von Entscheidungen Network-Messages NWM mit bestimmten Datensätzen zu senden zu entlasten, wobei der zentrale OPC UA spezifische Server OUSS ausgestaltet ist, dem Publisher P1 mitzuteilen, die Übertragung der Network-Message NWM nur mit den Datensätzen DS2,DS3, welcher der Subscriber S1 benötigt, durchzuführen.

Der Subscriber S1 kann demnach über eine Bedarfsmitteilung 32 den Bedarf DEM an den ersten Datensatz DS1 und dem zweiten Datensatz DS2 dem zentralen OPC UA spezifischen Server OUSS mitteilen. Als Folge davon, sendet der zentrale OPC UA spezifische Server OUSS einen Anpassungsbefehl 33, mit welchen er den Bedarf DEM des Subscribers S1 dem Publisher P1 mitteilt. Dieser Anpassungsbefehl 33 führt dazu, dass von dem Publisher P1 ein neuer Stream bereitgestellt werden kann, welcher nur noch die geforderten Datensätze des Subscribers SC1 enthält und diese per Network-Message NWM versendet werden können.

Zusätzlich ist der OPC UA spezifische Server OUSS ausgestaltet, aufgrund der Kenntnis des Bedarfs DEM eine maximal benötigte Bandbreite B zu ermitteln und eine aufgrund der Kenntnis des Bedarfs DEM resultierende Network-Message-Konfiguration NWMK an den Netzwerk-Konfigurator CNC weiterzugeben, wobei der Netzwerk-Konfigurator CNC ausgestaltet ist, dies in seiner zukünftigen Netzwerkplanung zu berücksichtigen.

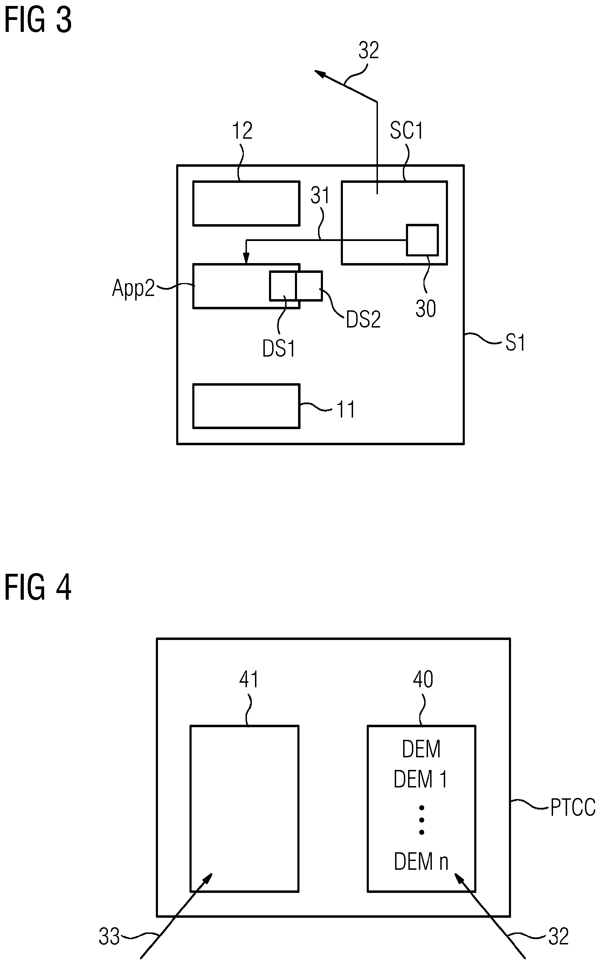

Gemäß FIG 3 ist der Subscriber S1 dargestellt, welcher nun erfindungsgemäß in seinem Subscriber-Client SC1 ein Bedarfsermittlungsmittel 30 aufweist, welches zusätzlich ausgestaltet ist, eine Ermittlungsanfrage 31 an die zweite Applikation App2 zu stellen. Die zweite Applikation App2 wird sodann mit dem Bedarf DEM antworten, wobei sie mitteilt, dass sie den ersten Datensatz DS1 und den zweiten Datensatz DS2 benötigt. Das Bedarfsermittlungsmittel 30 kann nun über eine Bedarfsmitteilung 32 dem zentralen OPC UA spezifischen Server OUSS mitteilen, dass der Subscriber S1 lediglich den ersten Datensatz DS1 und den zweiten Datensatz DS2 benötigt.

Gemäß FIG 4 weist der zentrale OPC UA spezifische Server OUSS eine Bedarfsdatenbank 40 auf, in welcher mittels der Bedarfsmitteilung 32 einzelne Bedarfe DEM1,...,DEMn von einzelnen Subscribern abgespeichert werden können. Des Weiteren weist der zentrale OPC UA spezifische Server OUSS ein Anpassungsmittel 41 auf, mit welchem er einen Anpassungsbefehl 33 in einem sogenannten Push Mode an den Publisher P1 sendet, welcher sich mit diesem Anpassungsbefehl 33 darauf vorbereiten kann, dass er in zukünftigen Streams bzw. in Network-Messages NWM nunmehr für den Subscriber S1 nur noch den ersten Datensatz DS1 und den zweiten Datensatz DS2 versendet, wodurch die unnötige Last des nach dem Stand der Technik ursprünglich immer mitgesendeten dritten Datensatz DS3 wegfällt.

## Patentansprüche

1. Industrielles Automatisierungssystems (1) umfassend
- ein industrielles echtzeitfähiges Kommunikationsnetzwerk (INET),
- mehrere Applikationen (App1,App2), welche auf das Kommunikationsnetzwerk (INET) zugreifen,
- wobei zumindest eine erste Applikation (Appl) als ein Publisher (P1) ausgestaltet ist und eine zweite Applikation (App2) als ein Subscriber (S1, S2) ausgestaltet ist,
- wobei der Publisher (P1) einen Datenstrom in Form einer Network-Message (NWM) versendet, welche einen oder mehrere Datensätze (DS1,...,DS3) umfasst, weiterhin aufweisend
- einen zentralen OPC UA spezifischen Server (OUSS), welcher Konfigurationsinformationen für das Kommunikationsnetzwerk (INET) aufbereitet,
- wobei der Publisher(P1) einen Publisher-Client (PC1) von dem zentralen OPC UA spezifischen Server (OUSS) aufweist, und
- der Subscriber (S1) einen Subscriber-Client (SC1) von dem zentralen OPC UA spezifischen Server (OUSS) aufweist, **dadurch gekennzeichnet, dass**
- der Subscriber-Client (SC1) ausgestaltet ist, dem zentralen OPC UA spezifischen Server (OUSS) einen Bedarf (DEM) mitzuteilen, welche Datensätze (DS2,DS3) der Subscriber (S1) benötigt,
- der zentrale OPC UA spezifische Server (OUSS) ausgestaltet ist, diesen Bedarf (DEM) an Datensätzen (DS2,DS3) des Subscribers (S1) abzuspeichern,
- weiterhin ist der zentrale OPC UA spezifischen Server (OUSS) ausgestaltet aufgrund der Kenntnis des Bedarfs (DEM) an Datensätzen (DS2,DS3) des Subscriber (S1) dem Publisher (P1) mitzuteilen, welche Datensätze (DS2,DS3) der Subscriber (S1) benötigt,
- dabei ist der zentrale OPC UA spezifische Server (OUSS) ausgestaltet,
- den Publisher (P1) von Entscheidungen der Network-Message (NWM) mit bestimmtem Datensätzen (D1,D2,D3) derart zu entlasten, dass der zentrale OPC UA spezifischen Server (OUSS) dem Publisher (P1) einen Anpassungsbefehl (33) mitteilt, welcher den Publisher (P1) veranlasst die Übertragung der Network-Message (NWM) nur mit den Datensätzen (DS2,DS3), die der Subscriber (S1) benötigt, durchzuführen.

2. Industrielles Automatisierungssystems (1) nach Anspruch 1, weiterhin aufweisend einen Netzwerk-Konfigurator (CNC), wobei der OPC UA spezifische Server (OUSS) ausgestaltet ist aufgrund der Kenntnis des Bedarfs (DEM) eine maximal benötigte Bandbreite (B) zu ermitteln und eine aufgrund der Kenntnis des Bedarfs (DEM) resultierende Network-Message-Konfiguration (NWMK) an den Netzwerk-Konfigurator (CNC) weiterzugeben, wobei der Netzwerk-Konfigurator (CNC) ausgestaltet ist dies in zukünftige Netzwerkplanungen einzubeziehen.

3. Industrielles Automatisierungssystems (1) nach Anspruch 2, wobei der Netzwerk-Konfigurator (CNC) ausgestaltet ist die zukünftige Netzwerkplanung zur Laufzeit durchzuführen.

4. Industrielles Automatisierungssystems (1), wobei das echtzeitfähige Kommunikationsnetzwerk (INET) ausgebildet ist nach dem Standard IEEE 802.1 Time Sensitiv Network zu arbeiten.

5. Industrielles Automatisierungssystems (1), wobei das echtzeitfähige Kommunikationsnetzwerk (INET) ausgebildet ist und nach dem Standard OPC UA PubSub basiert.
